# EUROPÄISCHE PATENTANMELDUNG

(11) **EP 2 385 353 A1**
(43) Veröffentlichungstag der Anmeldung: **09.11.2011**
(21) Anmeldenummer: 10004681.2
(22) Anmeldetag: 04.05.2010
(51) Int. Cl.: G01D 5/14, G01D 5/245

(54) **Magnetischer Encoder, insbesondere zur Verwendung in einem Messsystem zur Messung der Absolut-Position eines gegenüber einem Referenzkörper verschiebbaren oder verdrehbaren Körpers, und Messsystem**

(71) Anmelder: Wachendorff Automation GmbH & Co. KG, 65366 Geisenheim (DE); Bogen Electronic GmbH, 14163 Berlin (DE)
(72) Erfinder: Hanss, Tobias, 55413 Trechtingshausen (DE); Hoyer, Jörn, 12439 Berlin (DE)
(74) Vertreter: Tergau & Walkenhorst

(57) **Zusammenfassung**

Ein Magnetischer Encoder (2), insbesondere zur Verwendung in einem Messsystem (1) zur Messung der Absolut-Position eines gegenüber einem Referenzkörper verschiebbaren oder verdrehbaren Körpers, soll auf besonders einfache Weise und mit besonders hoher Messgenauigkeit die Messung der Absolut-Position eines gegenüber einem Referenzkörper verschiebbaren oder verdrehbaren Körpers ermöglichen. Dazu ist der Encoder (2) erfindungsgemäß mit einer Mehrzahl von in einer vorgesehenen Verschiebungs- oder Verdrehungsrichtung gesehen periodisch mit fester Periodenlänge beabstandet zueinander angeordneten, jeweils ein magnetisches Polpaar bildenden Magnetelementen (8) versehen, wobei jedes Magnetelement (8) ein an eine vorgegebene, für die Position des jeweiligen Magnetelements (8) in Verschiebungs- oder Verdrehungsrichtung gesehen charakteristische Sollkurve angepasstes Magnetisierungsverhältnis zwischen Nordpol- und Südpolanteilen aufweist.

## Beschreibung

Die Erfindung betrifft einen magnetischen Encoder, insbesondere zur Verwendung in einem Messsystem zur Messung der Absolut-Position eines gegenüber einem Referenzkörper verschiebbaren oder verdrehbaren Körpers. Sie bezieht sich weiter auf ein Messsystem mit einem derartigen magnetischen Encoder.

In einer Vielzahl von technischen Anwendungen sind Konzepte zum berührungslosen Messen von Positionen und Wegen zweier relativ zueinander beweglicher Bauteile von besonderer Bedeutung. Beispielsweise kann es im Bereich der Kraftfahrzeug-Technologie bedeutsam sein, eine lineare oder nahezu lineare Verschiebung zweier Bauteile relativ zueinander quantitativ zu erfassen, insbesondere in Pedalwegsensoren, Speicherwegsensoren in hydraulischen oder pneumatischen Speichern, Stoßdämpfersensoren, Füllstandsbestimmungen in Flüssigkeitstanks, Sensoren zur Ermittlung von Scheinwerferpositionen, Drosselklappensensoren, Linearmotoren, Ablängmaschinen für Stahlträger, Holzbearbeitungsmaschinen oder dergleichen. Gleichermaßen kann auch die quantitative Erfassung der Verdrehung zweier Komponenten relativ zueinander in der Art einer rotatorischen Relativbewegung oder Winkelverdrehung in einer Vielzahl von Anwendungsgebieten, wie beispielsweise in der Kraftfahrzeug-Technik, in Handhabungsgeräten, Druck-, Textil- oder Holzverarbeitungsmaschinen, Robotern, Windanlagen oder einer Vielzahl weiterer Anwendungen bedeutsam sein.

Sowohl bei der Erfassung von Linear- oder Verschiebebewegungen zweier Bauteile relativ zueinander als auch bei der Erfassung von Verdrehungen oder rotatorischen Relativbewegungen zweier Bauteile zueinander können verschiedenartige Technologien zum Einsatz kommen, insbesondere optische oder auch magnetische Systeme. Optische Abtastungen bieten dabei üblicherweise den Vorteil vergleichsweise hoher Auflösung und Präzision bei der Erfassung von Messwerten. Im Gegensatz dazu sind magnetische Systeme jedoch üblicherweise kostengünstiger und auch technologisch robuster als vergleichbare optische Systeme, so dass insbesondere für Anwendungen in rauen oder widrigen Umgebungsbedingungen Vorteile bei magnetfeld-basierten Systemen bestehen. Messsysteme, die zur Ermittlung relativer Positionsverschiebungen oder Verdrehungen zweier Bauteile relativ zueinander vorgesehen sind, setzen sich dabei in der Regel aus einem Signalgeber oder Encoder, der auf einem der Bauteile montiert ist, und einem Sensor oder Lesekopf zusammen, der den Signalgeber oder Encoder abtastet und auf dem jeweils anderen Bauteil montiert ist. Die Abtastung kann dabei insbesondere über Licht- oder Hochfrequenzsignale, elektrische oder magnetische Felder erfolgen. Als Impulsgeber sind unter anderem Lochscheiben, Zahnräder und magnetische Strukturen bekannt. Unter "Encoder" - oftmals auch als "Maßverkörperung" bezeichnet - ist hierbei insbesondere ein magnetisches oder magnetisiertes Strukturelement mit einer durch Magnetisierung oder dergleichen aufgeprägten magnetischen Signatur zu verstehen, dessen Magnetfeld oder magnetische Signatur über den Sensor erfass- und auswertbar ist.

Üblicherweise unterscheidet man zwischen so genannten Inkrementalgebern einerseits und so genannten Absolutgebern andererseits. Bei einem Inkrementalgeber werden über ein optisches oder magnetisches Messsystem Winkeländerungen (rotatorisch) oder Positionsänderungen (linear) erfasst und in Form von impulsförmigen Inkremental-, also Zählsignalen, übertragen. Der Bezug zur physikalischen Lageinformation wird über eine Referenzierung eines Nullpunktes hergestellt, von dem aus die Änderungen gezählt werden. Vorteil ist, dass nur Änderungsinformationen übertragen werden müssen, was unter Anderem für schnelle, dynamische Anwendungen günstiger ist. Nachteilig ist, dass bei einem Spannungsausfall die Referenzierung und somit der Bezug zur physikalischen Lageinformation verloren geht und neu referenziert werden muss. Das reine Verharren in einer Ruheposition ist nicht problematisch, solange die Lageinformation im Zähler gehalten wird. Bei einem Absolutgeber ist andererseits auf einem zugeordneten Referenzkörper oder Maßstab die physikalische Position diskret oder kontinuierlich eindeutig abgebildet, wie z. B. auf einer Codescheibe oder einem codierten Linearmaßstab. Jeder diskreten physikalischen Position ist ein eindeutiger codierter Wert zugeordnet, bei einer analogen Abtastung ist jeder Position ein kontinuierlicher eindeutiger Analogwert zugeordnet. Ein Spannungsausfall führt nicht zu einem Verlust dieser Zuordnung. Nachteilig ist der erhöhte Aufwand für die Realisierung und die Übertragung (z. B. durch analoge Signale entsprechender Güte oder ganzen digitalen Positionswörtern). Üblicherweise werden bei einem Absolutsystem mindestens zwei Spuren verwendet. Eine Spur wird mit einem Digitalcode versehen, in dem sich eine abgetastete Strecke immer nur einmal auf dem Umfang befindet. Damit wird die Absolutposition auf eine Basisteilung genau definiert (einige Millimeter). Die genaue Positionierung erfolgt anschließend über die Auswertung einer Inkrementalspur.

Der Erfindung liegt daher die Aufgabe zugrunde, einen magnetischen Encoder für ein Messsystem der oben genannten Art anzugeben, mit dem auf besonders einfache Weise und mit besonders hoher Messgenauigkeit die Messung der Absolut-Position eines gegenüber einem Referenzkörper verschiebbaren oder verdrehbaren Körpers ermöglicht ist. Zudem soll ein für die Verwendung eines derartigen magnetischen Encoders besonders geeignetes Messsystem angegeben werden.

Bezüglich des magnetischen Encoders wird diese Aufgabe erfindungsgemäß gelöst, indem der Encoder eine Mehrzahl von in einer vorgesehenen Verschiebungs-oder Verdrehungsrichtung gesehen periodisch mit fester Periodenlänge beabstandet zueinander angeordneten, jeweils ein magnetisches Polpaar bildenden Magnetelementen aufweist, wobei jedes Magnetelement ein an eine vorgegebene, für die Position des jeweiligen Magnetelements in Verschiebungs- oder Verdrehungsrichtung gesehen charakteristische Sollkurve angepasstes Magnetisierungsverhältnis zwischen Nordpol- und Südpolanteilen aufweist.

Für die folgenden Benennungen und Bezeichnungen wird dabei davon ausgegangen, dass - wie bei gängigen magnetfeldbasierten Schreib-Lese-Systemen üblich - magnetfeldbasierte Informationen in ein geeignetes Material eingespeichert werden können, indem über beispielsweise einen magnetischen Schreibkopf ein geeignetes Material in seinem Oberflächenbereich geeignet magnetisiert wird, indem beispielsweise im Material vorhandene magnetische Dipole oder Domänen relativ zum Schreibkopf geeignet ausgerichtet werden. Ein Auslesen über einen geeigneten Lesekopf ist sodann möglich durch Ermittlung der relativen Ausrichtung dieser Magnetisierung, also der magnetischen Dipole oder Domänen im Material, relativ zu einer Referenz-Richtung im Lesekopf. Die Bezeichnung "Nordpolanteil" und "Südpolanteil" ist dabei stellvertretend für eine jeweils geeignet ausgerichtete Magnetisierung, also insbesondere einerseits parallel und andererseits antiparallel zu einer vorgegebenen Referenzachse, zu verstehen.

Die Erfindung geht von der Überlegung aus, dass bei besonders einfacher Bauweise zuverlässig und mit vergleichsweise hoher Auflösung die Bestimmung der Absolut-Position eines mit dem Encoder bestückten Bauteils relativ zu einem - üblicherweise ortsfest gehaltenen - Referenzbauteil ermöglicht ist, indem auf geeignete Weise eine für einen Magnetfeldsensor im Referenzbauteil geeignet auslesbare ortsaufgelöste magnetische Signatur durch den Encoder erzeugt wird. Um dabei bei gering gehaltenem Aufwand eine vergleichsweise hoch genaue Positionsmessung zu ermöglichen, sollten auch bei einem so genannten "einspurigen" magnetischen Signalgeber, dessen Magnetfeldcharakteristik über einen zugeordneten Sensor auslesbar ist, ein entsprechend geeignetes komplexes Feld bereitgestellt werden.

Um dies zu ermöglichen, ist vorgesehen, eine magnetische Signatur auf der Basis der Überlagerung zweier Signaturen, ähnlich der Überlagerung mehrerer Signale mit unterschiedlichen Frequenzen in der Elektrotechnik, bereitzustellen. Die erste Signatur soll dabei nunmehr durch die jeweils ein magnetisches Polpaar bildenden Magnetelemente beigesteuert werden, die in der vorgesehenen Verschiebungs- oder Verdrehungsrichtung gesehen periodisch und mit fester Periodenlänge beabstandet zueinander angeordnet sind. Durch diese periodisch beabstandete Anordnung mit fester Periodenlänge ist in Analogie zu einer "Grundwelle" eine erste charakteristische Signatur mit einer durch die Periodenlänge vorgegebenen Wellenlänge verfügbar. Um die gewünschte hohe Ortsauflösung auch bei der Erfassung der Absolut-Position des Encoders zu ermöglichen, ist die Überlagerung dieser ersten charakteristischen Signatur mit einer weiteren charakteristischen Signatur vorgesehen. Diese soll quantitativ durch eine geeignete Einstellung der Gesamtmagnetisierung des jeweiligen Magnetelements, also insbesondere durch eine geeignete Wahl des jeweiligen Magnetisierungsverhältnisses zwischen "Nordpolanteilen" und "Südpolanteilen", bereitgestellt werden. Das Magnetisierungsverhältnis des jeweiligen Magnetelements ist dabei, entsprechend der Positionierung des jeweiligen Magnetisierungselements innerhalb des Encoders in der jeweiligen Verschiebungs- oder Verdrehungsrichtung gesehen, an eine für diese Position charakteristische vorgegebene Sollkurve angepasst.

Die Magnetelemente können dabei in der Art aufgebrachter Domänenstrukturen segment- oder blockweise konstant gehaltene Magnetisierungen mit bedarfsabhängig gewählter Magnetisierungsrichtung (Unterscheidung zwischen "Nordpolsegment" und "Südpolsegment") aufweisen, wobei das genannte Magnetisierungsverhältnis durch geeignete Wahl der jeweiligen Block- oder Segmentgrößen eingestellt werden kann. Um aber eine besonders hohe Ortsauflösung bei der Ermittlung der Absolut-Position zu ermöglichen, ist die Magnetisierung der Magnetelemente vorteilhafterweise derart gewählt, dass die vorgegebene charakteristische Sollkurve besonders weitgehend angenähert wird. Dazu weisen die Magnetelemente vorteilhafterweise jeweils eine in Verschiebungs- oder Verdrehungsrichtung gesehen geeignet, vorzugsweise kontinuierlich, variierende Magnetisierung auf.

Die Magnetelemente könnten zudem jeweils räumlich begrenzt und beabstandet zueinander angeordnet sein. Um aber die Genauigkeit bei der Positionsmessung noch weiter zu begünstigen, sind in Verschiebungs- oder Verdrehungsrichtung gesehen benachbarte Magnetelemente vorteilhafterweise derart dimensioniert und positioniert, dass sie unmittelbar aneinander angrenzen. Damit entspricht in Verschiebungs- oder Verdrehungsrichtung gesehen die Größe oder die Länge jedes Magnetelements zweckmäßigerweise der Periodenlänge.

Der magnetische Encoder kann zur Erfassung von Positionen in einer linearen Anordnung, also als so genannter Linearmaßstab zur Erfassung einer Verschiebeposition, vorgesehen sein. Bei einer derartigen Ausgestaltung sind die Magnetelemente zweckmäßigerweise zur Erfassung von Positionen derart auf einem gemeinsamen Linearmaßstab angeordnet, dass sich die Periodenlänge über die gesamte Länge dieses Maßstabs nicht ändert. In besonders vorteilhafter Ausgestaltung ist der magnetische Encoder aber zum Einsatz bei Wellen- oder Hohlwellen-Applikationen geeignet ausgestaltet. Dabei ist der Encoder zur Erfassung der Winkelposition bei der Verdrehung eines Körpers in Relation zu einem Referenzkörper vorgesehen, wobei der Encoder zur Montage auf einer Welle, also insbesondere mit für die Durchführung der Welle freigehaltenem Zentralbereich, ausgestaltet ist. Gerade für derartige Hohlwellen-Applikationen konnten bislang vergleichsweise präzise arbeitende magnetbasierte Messsysteme nur mit erhöhtem Aufwand, insbesondere unter Rückgriff auf zumindest zwei Spuren, bereitgestellt werden, so dass dieses Anwendungsgebiet des nun vorgesehenen Encoders besondere Vorteile bietet.

Um dies zu ermöglichen, sind die Magnetelemente in besonders vorteilhafter Ausgestaltung zur Erfassung von Verdrehungspositionen derart auf einem gemeinsamen Kreisumfang angeordnet, dass die Periodenlänge einen Teiler des Kreisumfangs bildet. Unter "periodischer Anordnung" ist hierbei insbesondere zu verstehen, dass die Magnetelemente, bezogen auf ihre jeweiligen Referenzpunkte wie beispielsweise ihre jeweiligen Mittelpunkte, Zentralpunkte oder dergleichen, in festem, gleich bleibendem Wnkelabstand zueinander angeordnet sind.

Unter "Teiler" ist hierbei im Einklang mit der mathematischen Definition insbesondere zu verstehen, dass die Gesamtlänge des Kreisumfangs, auf dem die Magnetelemente angeordnet sind, ein ganzzahliges Vielfaches der Periodenlänge ergibt. Gerade für den Fall, dass die Magnetelemente aneinander angrenzend angeordnet sind, umspannen sie somit in dieser vorteilhaften Ausgestaltung den Kreisumfang lückenlos und vollständig, und durch die Abstimmung der Periodenlänge auf den Kreisumfang ist auch bei mehrmaliger vollständiger Umdrehung der jeweiligen Welle - ein zuverlässiges Mitzählen vollständig absolvierter Umdrehungen vorausgesetzt - die gewünschte Positionierungsmessung auch im Ruhezustand der Bauteile zueinander möglich.

Aufbauend auf dieser Anordnung ist in besonders vorteilhafter Weiterbildung eine besonders hohe Winkelauflösung bei der Ermittlung des Verdrehwinkels mit hoher Zuverlässigkeit möglich, indem sie die Überlagerung zweier periodischer Signalcharakteristiken miteinander bereitgestellt ist. Dazu ist in besonders vorteilhafter Weiterbildung die Sollkurve für das Magnetisierungsverhältnis der Magnetelemente ihrerseits ebenfalls periodisch ausgestaltet, wobei die Periodenlänge der Sollkurve ebenfalls einen Teiler des Kreisumfangs bildet oder in besonders vorteilhafter Weise gleich der Länge des Kreisumfangs ist. Damit kann die Sollkurve, die beispielsweise als Sinuskurve vorgegeben ist, in ihrer Periodenlänge vollständig auf den Kreisumfang abgestimmt sein, so dass durch die Kombination der in den Magnetierungsverhältnissen der Magnetelemente implementierten Sollkurve mit der an sich bereits periodischen Anordnung der Magnetelemente die gewünschte Überlagerung zweier Frequenzanteile in der Magnetfeldcharakteristik erreichbar ist. Gerade bei einer derartigen Überlagerung zweier periodischer Anteile ist unter Rückgriff auf die hierfür verfügbaren Methoden eine besonders zuverlässige Signalauswertung und damit eine besonders hohe Genauigkeit bei der Winkelmessung ermöglicht.

In einer alternativ auch möglichen Ausgestaltung als Linearsystem sollte die Modulationsperiode ein ganzzahliges Vielfaches der Polperiode sein.

Grundsätzlich ist die Anordnung des Encoders beispielsweise auf der Stirnseite einer Welle möglich, wenn der Verdrehwinkel der Welle bestimmt werden soll. Vorteilhafterweise sind die Magnetelemente des Encoders aber umfangsseitig auf einem Trägerzylinder angeordnet. Dieser kann seinerseits in seinem Zentralbereich hohl ausgeführt sein, so dass die Gesamtanordnung besonders günstig für Hohlwellenapplikationen einsetzbar ist.

Bezüglich des Messsystems wird die genannte Aufgabe gelöst, indem der gegenüber dem Referenzkörper verschiebbare oder verdrehbare Körper mit dem magnetischen Encoder der genannten Art versehen ist, wobei der Referenzkörper mit mindestens zwei, vorzugsweise mindestens drei, voneinander in Verschiebe- oder Verdrehrichtung beabstandet zueinander angeordneten Magnetfeld- oder Flussdichtesensoren versehen ist.

Gerade durch die Verwendung zweier derart beabstandet zueinander angeordneter Magnetfeldsensoren ist dabei die durch den Encoder bereitgestellte Signalstruktur und der Magnetfeldcharakteristik besonders zielgerichtet auswertbar. Insbesondere kann durch eine derartige Konstellation die Überlagerung der beiden periodischen Anteile, einerseits gegeben durch die periodische Anordnung der Magnetelemente als solche und andererseits gegeben durch die vorzugsweise periodisch variierende Magnetisierung der Magnetelemente, in ihre Einzelbestandteile aufgelöst werden, so dass eine besonders zuverlässige Ortsbestimmung ermöglicht ist. Abhängig vom gewählten Abstand zwischen den Magnetfeldsensoren kann unter Rückgriff auf eine zugeordnete mathematische Funktion eine Umrechnung der gemessenen Signale und eine Zuordnung der Signalanteile zu den beiden periodischen Anteilen erfolgen.

Auf besonders einfache Weise ist dies möglich, indem als Abstand zwischen den Magnetfeldsensoren vorteilhafterweise ein Vielfaches eines Viertels der Periodenlänge, besonders bevorzugt etwa die halbe Periodenlänge, gewählt ist. Insbesondere kann dabei gerade infolge der genannten Überlagerung das periodische Grundsignal durch Differenzbildung aus den Signalen der beiden Magnetfeldsensoren ermittelt werden. Das in der Art einer "Oberwelle" überlagerte, der für die Position charakteristischen Sollkurve entsprechende und in die Magnetisierung der jeweiligen Magnetelemente implementierte Zusatzsignal kann hingegen durch Addition der beiden Teilsignale der beiden Magnetfeldsensoren ermittelt und damit besonders präzise bereitgestellt werden.

Insbesondere wenn die in die Magnetisierung implementierte Sollkurve (die so genannte "Unterwelle") Sinusform aufweist und damit entsprechend geeignet periodisch gewählt ist, kann aus den entsprechenden Signalen insbesondere unter Berücksichtigung von Steigung und Amplitude des Unterwellensignals die Winkelposition des Encoders relativ zu den Sensoren und damit die Winkelposition des mit dem Encoder versehenen Körpers relativ zum die Sensoren tragenden Referenzkörper besonders genau bestimmt werden. Um dabei auch bei Stillstand des Encorders relativ zu den Sensoren eine zuverlässige Bestimmung des absoluten Winkels zu ermöglichen, ist vorteilhafterweise noch ein weiterer, also ein dritter, Sensor vorgesehen. Dieser ist vorzugsweise um 90° versetzt zu dem ersten Sensoren angeordnet, so dass ein eindeutig definiertes Ergebnis der Positionsmessung gewährleistet ist.

Als Magnetfeldsensoren können beliebige geeignete Sensoren verwendet werden, insbesondere solche, deren Signal zweckmäßigerweise proportional zu einer Komponente der Flussdichte oder des Magnetfeldes ist. Vorteilhafterweise sind als Sensoren Hall-Sensoren vorgesehen.

Die mit der Erfindung erzielten Vorteile bestehen insbesondere darin, dass durch die periodische Anordnung der Magnetelemente mit fester Periodenlänge einerseits und die positionsspezifisch vorgegebene Magnetisierung durch geeignete Wahl des jeweiligen Magnetisierungsverhältnisses zwischen "Nordpolanteil" und "Südpolanteil" entsprechend der vorgegebenen Sollkurve andererseits gezielt eine Überlagerung von Signalanteilen unterschiedlicher Frequenzen und damit eine vergleichsweise hohe Informationsdichte mit einem einzigen magnetischen System (einer einzigen so genannten "Magnetspur") möglich ist. Damit ist vergleichsweise einfach gehaltener Bauweise eine besonders zuverlässige Positionsbestimmung ermöglicht.

Darüber hinaus wird durch die entsprechende Magnetisierung und Sensoranordnung das Überlagerungssignal so ausgebildet, dass die Grundwelle eine eindeutige Zuordnung zwischen Analogwert Sin/Cos→arctan und Winkel wie bei der eben beschriebenen axialen Anordnung mit Diametralmagnet zulässt, und außerdem über die durch die n-Polpaare eine periodische Oberwelle "aufmoduliert" wird, die zur Feinauflösung (z. B. ebenfalls über Acrtan-Funktion) genutzt werden kann. Dadurch ist einerseits bei n-Polpaaren eine n-fach höhere Auflösung möglich als bei Verwendung des Diametral magnetisierten Magneten (ein Polpaar), durch die Möglichkeit der ringförmigen Anordnung lassen sich auch Hohlwellenanordnungen realisieren. Auf eine aufwändige Mehrspurmagnetisierung und ein ebenfalls aufwändigen Mehrspurlesekopf kann verzichtet werden.

Ebenfalls vorteihaft ist, dass durch eine entsprechende Abtastung der Polpaare auch relativ einfach schnelle Inkrementalsignale zur Verfügung stehen. Eine Anwendung sind hier Motorfeedback-Anwendungen: Hochaufgelöste Lageinformation im Stillstand, schnelle inkrementale Regelsignale bei Drehung.

Ein wesentlicher Vorteil gegenüber anderen Absolutgebern ist aber auch, dass er eine Absolutposition mit der Genauigkeit eines Inkrementalgebers aus nur einer Spur erzeugt. Es treten keine Überlagerungseffekte mit einer Digitalspur auf, und er hat eine höhere Informationsdichte als ein einzelner Magnet.

Ein Ausführungsbeispiel der Erfindung wird anhand einer Zeichnung näher erläutert. Darin zeigen:
- Fig. 1: ein Messsystem zur Messung der Absolut-Position eines gegenüber einem Referenzkörper verdrehbaren Körpers,
- Fig. 2: ein Diagramm mit einer Mehrzahl von Signalkurven,
- Fig. 3: einen magnetischen Encoder, und
- Fig. 4: den Verlauf der Magnetisierung des Encoders gemäß Fig. 3.

Gleiche Teile sind in allen Figuren mit denselben Bezugszeichen versehen.

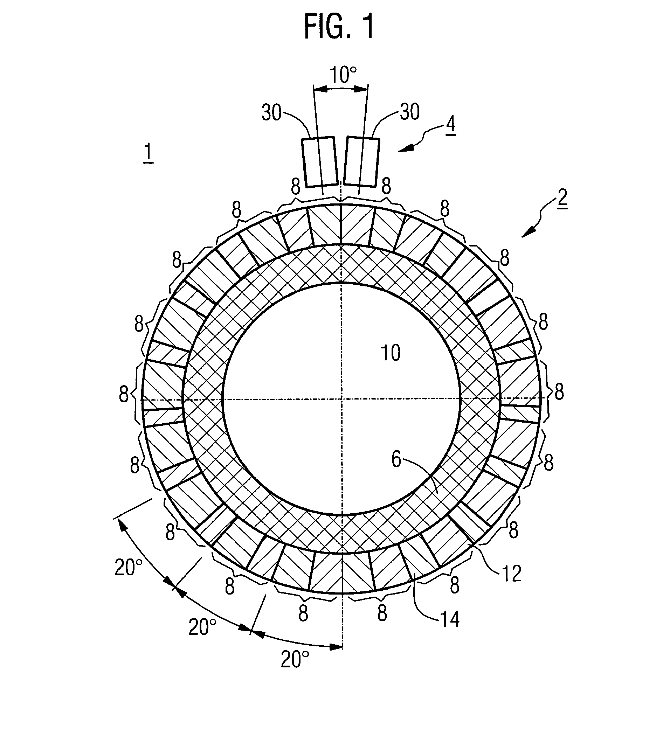

Das Messsystem 1 gemäß Fig. 1 ist zur Messung der Absolut-Position eines gegenüber einem Referenzkörper verdrehbaren Körpers in der Art einer Messung des absoluten Vedrehwinkels vorgesehen. Das Messsystem 1 nach dem Ausführungsbeispiel ist somit für die Erfassung rotatorischer Relativ-Positionierungen von Referenzkörper einerseits und zu messendem Körper andererseits vorgesehen; bei geometrischer Veränderung einzelner Komponenten ist grundsätzlich der signaltechnische Aufbau aber auch ohne weiteres auf alternative Messsysteme zur Messung der Absolut-Position eines gegenüber einem Referenzkörper in linearer Richtung verschiebbaren Körpers geeignet.

Das Messsystem 1 umfasst einen magnetischen Encoder 2, der im Ausführungsbeispiel fest mit dem eigentlich zu überwachenden Körper verbunden werden kann. Der magnetische Encoder 2 weist in seinem Außenbereich eine magnetische Signatur in Form eines Magnetfeldes auf, das zur Erzeugung weiter verwertbarer messtechnischer Signale mit einer Magnetfeld-Sensoranordnung 4 zusammenwirkt. Die Magnetfeld-Sensoranordnung 4, die ausgangsseitig mit einer nicht näher dargestellten Auswerteeinheit, insbesondere einer Auswerteelektronik, verbunden ist, ist dabei fest mit dem vorgesehenen Referenzkörper verbunden. Eine Verschiebung oder - wie im vorliegenden Ausführungsbeispiel konkret vorgesehen - eine Verdrehung des magnetischen Encoders 2 und damit des mit ihm verbundenen zu überwachenden Körpers gegenüber der Magnetfeld-Sensoranordnung 4 und damit dem Referenzkörper resultiert somit aufgrund der sich verändernden, über die Magnetfeld-Sensoranordnung 4 erfassbaren Signatur des magnetischen Encoders 2 in geeigneten Messsignalen, die zur Bestimmung eines Positionskennwerts genutzt werden können.

Der magnetische Encoder 2 und damit auch das Messsystem 1 insgesamt sind in einer für Hohlwellen-Applikationen geeigneten Form ausgeführt, so dass der magnetische Encoder 2 direkt auf eine Welle aufgeflanscht und damit für eine Vielzahl von Messsystemen zur Erfassung von Dreh- oder Winkelpositionen genutzt werden kann. Dazu umfasst der magnetische Encoder 2 einen Trägerzylinder 6, auf dessen äußerem Umfang eine Mehrzahl von Magnetelementen 8 angeordnet sind. Innenseitig ist der Trägerzylinder 6 jedoch als Hohlzylinder mit Zentralbohrung 10 ausgeführt, so dass er in geeigneter Weise auf eine entsprechend dimensionierte Welle aufgesteckt werden kann. Selbstverständlich ist auch eine entsprechend vertauschte Anordnung mit am Referenzkörper angeordnetem Encoder 2 und am zu überwachenden Körper angeordneter Magnetfeld-Sensoranordnung 4 möglich.

Der magnetische Encoder 2 ist hinsichtlich seines für die Magnetfeld-Sensoranordnung 4 erfassbaren äußeren Magnetfeldes mit einer charakteristischen Signatur konfiguriert, die bei vergleichsweise einfach gehaltener Bauweise und in so genannter einspuriger Ausführung, also mit einer einzigen magnetischen Signatur, eine besonders zuverlässige und vergleichsweise genaue Ermittlung der Winkelposition des magnetischen Encoders 2 in Relation zur Magnetfeld-Sensoranordnung 4 in der Art einer Absolut-Positionsmessung für den mit dem magnetischen Encoder 2 versehenen Körper auch im Ruhezustand, also ohne aktuelle Bewegung des Körpers gegenüber dem Referenzkörper, ermöglicht. Dazu ist die magnetische Signatur des magnetischen Encoders 2 gezielt in der Art einer Überlagerung zweier periodischer Signaturanteile ausgeführt.

Zur Bildung dieser Signaturanteile sind die Magnetelemente 8 geeignet ausgestaltet. Jedes Magnetelement 8 stellt dabei ein magnetisches Polpaar mit einem "Nordpolanteil", im Ausführungsbeispiel gemäß Fig. 1 skizzenartig jeweils durch ein schraffiertes Flächenelement 12 charakterisiert, und mit einem magnetischen "Südpolanteil", in Fig. 1 durch ein Flächenelement 14 mit anderer Schraffur charakterisiert, dar. Unter "Nordpolanteil"` und "Südpolanteil" sind hierbei lokal begrenzte Oberflächensegmente mit einer Magnetisierung zu verstehen, deren Ausrichtung relativ zu einem geeigneten Lesekopf in der Magnetfeld-Sensoranordnung 4 in der Art von "paralleler" bzw. "antiparalleler" Ausrichtung unterschieden werden kann, wie dies an sich auch aus anderen magnetbasierten Datenspeicher-und -leseeinrichtungen bekannt ist.

Ein erster Signaturanteil in der magnetischen Signatur des Encoders 2 resultiert nunmehr daraus, dass die Magnetelemente 8 periodisch und mit fester Periodenlänge beabstandet zueinander auf dem äußeren Kreisumfang des Trägerzylinders 6 angeordnet sind. Zusätzlich sind die Magnetelemente 8 im Ausführungsbeispiel dabei derart dimensioniert, dass benachbarte Magnetelemente unmittelbar aneinander angrenzen, so dass sich im Ausführungsbeispiel ein durchgängiger, den Trägerzylinder 6 vollständig umschließender Kranz aus Magnetelementen 8 ergibt. Die feste Periodenlänge bzw. die (bezogen auf die Mittelpunkte) gleiche Beabstandung der Magnetelemente 8 zueinander entspricht dabei der Vorgabe, dass die Magnetelemente 8 jeweils die gleiche äußere Länge in Verdrehrichtung aufweisen. Im Ausführungsbeispiel sind die Magnetelemente 8 dabei derart gewählt, dass sie jeweils einen Winkelbereich auf dem Außenumfang des Trägerzylinders 6 von 20° abdecken. Damit sind die Magnetelemente 8 derart auf den gemeinsamen Kreisumfang des Trägerzylinders angeordnet, dass die Periodenlänge (im Ausführungsbeispiel entsprechend einem Winkelbereich von 20°) einen Teiler des Kreisumfangs bildet; aufgrund des abgedeckten Winkelbereichs von 20° sind im Ausführungsbeispiel insgesamt achtzehn Magnetelemente 8 zur vollständigen Umschließung des Trägerzylinders 6 vorgesehen.

Darüber hinaus weisen die Magnetelemente 8 zur Bereitstellung des zweiten, dem ersten Signaturanteil zu überlagernden Signaturanteils eine in Abhängigkeit von ihrer jeweiligen Position innerhalb des Encoders 2 variierende Magnetisierung auf. Dabei weist jedes Magnetelement 8 ein an einer vorgegebenen, für seine jeweilige Position in Verdrehungsrichtung gesehen charakteristische Sollkurve angepasstes Magnetisierungsverhältnis zwischen Nordpol- und Südpolanteil auf. Im Ausführungsbeispiel gemäß Fig. 1 ist dies durch entsprechende Variation der Flächenanteile 12, 14 dargestellt. Die entsprechende Variation der Nordpol- bzw. Südpolanteile kann dabei in der Art einer kontinuierlichen Veränderung der Magnetisierung innerhalb des jeweiligen Magnetelements 8 oder auch in der Art einer Block-, Domänen- oder segmentartigen Zusammensetzung durch die geeignete Wahl einzelner Flächenbereiche mit konstant gehaltener Magnetisierung innerhalb des jeweiligen Magnetelements 8 erfolgen.

Im Ausführungsbeispiel ist dabei als charakteristische Sollkurve für die Magnetisierungsverhältnisse eine Sinuskurve mit einer Periodenlänge von 360° vorgesehen, so dass bei einer vollständigen Umdrehung des magnetischen Encoders 2 um seine Zentralachse diese Sollkurve oder die Magnetisierungskurve genau einmal vollständig durchlaufen wird.

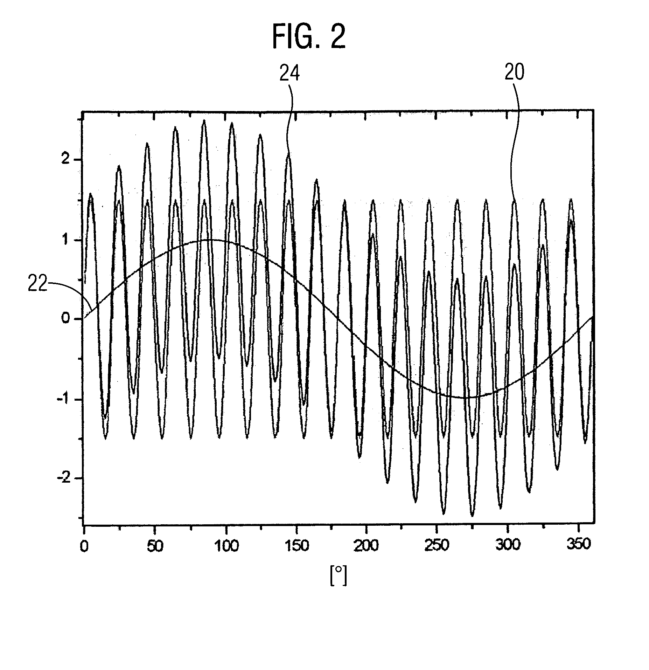

Die entsprechenden Signaturanteile und die entstehende Gesamtsignatur sind beispielhaft im Diagramm nach Fig. 2 dargestellt. Dabei ist auf der x-Achse als Ortskennwert die Winkelposition in Umfangsrichtung des Encoders 2 abgetragen. Auf der γ-Achse ist hingegen ein für die jeweilige Magnetisierung charakteristischer Kennwert abgetragen. Als Bestandteile der magnetischen Signatur dient dabei im Ausführungsbeispiel einerseits der erste Signaturanteil, entsprechend der Kurve 20, der aufgrund der mit einer Periodenlänge von 20° angeordneten Polpaare in der Art einer Grundwelle einen sinusförmigen Verlauf mit einer Periodenlänge von 20° aufweist. Dieser in der Art einer Oberwelle überlagert ist der durch die genannte Variation des Magnetisierungsverhältnisses erzeugte zweite Signaturanteil, repräsentiert durch die Kurve 22. Durch die Überlagerung dieser Signaturanteile entsteht als Gesamtsignatur die Kurve 24.

Zur hoch auflösenden und präzisen Auswertung dieser Signatur umfasst die Magnetfeld-Sensoranordnung 4 des Messsystems 1 zwei - im Ausführungsbeispiel als Hall-Sensoren ausgestaltete - Magnetfeldsensoren 30, die in Verdrehungsrichtung gesehen beabstandet voneinander angeordnet sind. Um eine besonders präzise und zuverlässige Auswertung zu ermöglichen, sind die Magnetfeldsensoren 30 dabei in Verdrehrichtung gesehen in einem Abstand entsprechend der halben Periodenlänge der Magnetelemente 8, also in einem Abstand entsprechend einem Verdrehwinkel von 10° zueinander, angeordnet. Durch diese auf die Periodenlänge der Magnetelemente 8 abgestimmte Anordnung der Magnetfeldsensoren 30 ist eine vergleichsweise einfache und zuverlässige Auflösung der Gesamtsignatur des Encoders 2 und eine Ermittlung der beiden Signaturanteile separat voneinander möglich. Bei einer Addition der Sensorsignale der beiden Magnetfeldsensoren 30 wird nämlich der Grundwellenanteil eliminiert, und es wird als Additionssignal lediglich der auf den zweiten Signaturanteil zurückzuführende Signalanteil ausgegeben. Damit ist unmittelbar eine Erfassung der sinusartig verlaufenden Magnetisierung möglich, so dass direkt und unmittelbar die Winkelposition des magnetischen Encoders 2 ermittelt werden kann. Falls hingegen eine Subtraktion der beiden Sensorsignale vorgenommen wird, so wird der zweite Signaturanteil herausgefiltert und lediglich der erste Signaturanteil als Ausgangssignal ausgegeben. Mit diesem Subtraktionssignal ist somit eine Bewegungsbestimmung mit der Genauigkeit einer Inkrementalteilung entsprechend der Periodenlänge der Magnetelemente 8, also im Ausführungsbeispiel von 20°, möglich.

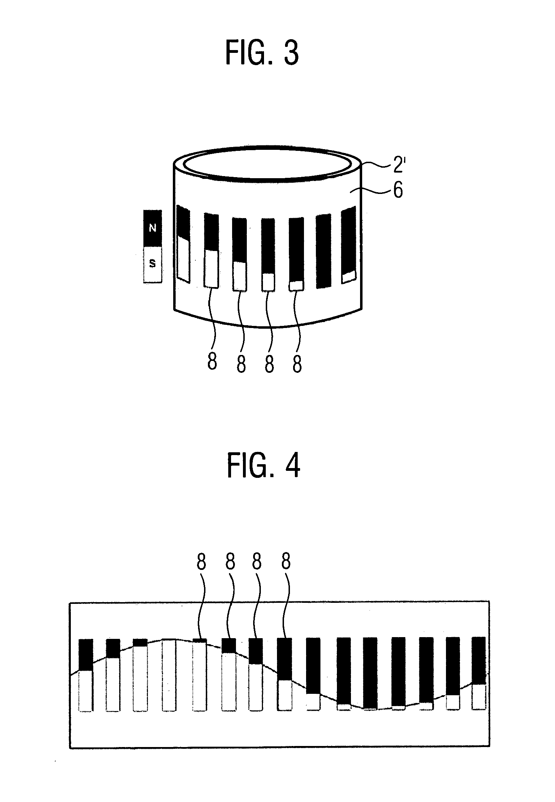

Ein alternatives Ausführungsbeispiel für einen magnetischen Encoder 2' ist in Fig. 3 gezeigt. Dabei sind auf dem äußeren Umfang eines Trägerzylinders 6 ebenfalls periodisch beabstandet zueinander und mit konstant gehaltener Periodenlänge Magnetelemente 8 angeordnet. Im Ausführungsbeispiel gemäß Fig. 3 erstrecken diese sich in ihrer Längsrichtung jedoch parallel zur Zentralachse des Trägerzylinders 6 und sind unter Bildung von Lücken oder Zwischenräumen beabstandet zueinander angeordnet. Auch in diesem Ausführungsbeispiel variieren die Magnetisierungsverhältnisse der Magnetelemente zwischen jeweiligem Nordpolanteil und Südpolanteil gemäß einer vorgegebenen, im Ausführungsbeispiel ebenfalls sinusförmigen Sollkurve, charakterisiert durch die schwarzen bzw. weißen Flächenanteile der Magnetelemente 8. In der abgerollten Darstellung gemäß Fig. 4 wird dabei der sinusförmige Verlauf der genannten Sollkurve deutlich.

### Bezugszeichenliste

- 1: Messsystem
- 2: Encoder
- 4: Sensoranordnung
- 6: Trägerzylinder
- 8: Magnetelement
- 10: Zentralbohrung
- 12: Flächenelement
- 14: Flächenelement
- 20: Kurve
- 22: Kurve
- 24: Kurve
- 30: Magnetfeldsensor

## Patentansprüche

1. Magnetischer Encoder (2), insbesondere zur Verwendung in einem Messsystem (1) zur Messung der Absolut-Position eines gegenüber einem Referenzkörper verschiebbaren oder verdrehbaren Körpers, mit einer Mehrzahl von in einer vorgesehenen Verschiebungs- oder Verdrehungsrichtung gesehen periodisch mit fester Periodenlänge beabstandet zueinander angeordneten, jeweils ein magnetisches Polpaar bildenden Magnetelementen (8), wobei jedes Magnetelement (8) ein an eine vorgegebene, für die Position des jeweiligen Magnetelements (8) in Verschiebungs- oder Verdrehungsrichtung gesehen charakteristische Sollkurve angepasstes Magnetisierungsverhältnis zwischen Nordpol- und Südpolanteilen aufweist.

2. Magnetischer Encoder (2) nach Anspruch 1, dessen Magnetelemente (8) jeweils eine in Verschiebungs- oder Verdrehungsrichtung gesehen variierende, vorzugsweise kontinuierlich variierende, Magnetisierung aufweisen.

3. Magnetischer Encoder (2) nach Anspruch 1 oder 2, bei dem in Verschiebungs- oder Verdrehungsrichtung gesehen benachbarte Magnetelemente (8) unmittelbar aneinander angrenzen.

4. Magnetischer Encoder (2) nach einem der Ansprüche 1 bis 3, dessen Magnetelemente (8) zur Erfassung von Verdrehungspositionen derart auf einem gemeinsamen Kreisumfang angeordnet sind, dass die Periodenlänge einen Teiler des Kreisumfangs bildet.

5. Magnetischer Encoder (2) nach Anspruch 4, bei dem die Sollkurve für das Magnetisierungsverhältnis der Magnetelemente (8) ebenfalls periodisch ist mit einer Periodenlänge, die einen Teiler des Kreisumfangs bildet, vorzugsweise gleich dem Kreisumfang ist.

6. Magnetischer Encoder (2) nach Anspruch 4 oder 5, dessen Magnetelemente (8) umfangsseitig oder stirnseitig auf einem Trägerzylinder (6) angeordnet sind.

7. Messsystem (1) zur Messung der Absolut-Position eines gegenüber einem Referenzkörper verschiebbaren oder verdrehbaren, mit einem magnetischen Encoder (2) nach einem der Ansprüche 1 bis 6 versehenen Körpers, bei dem der Referenzkörper mit mindestens zwei voneinander in Verschiebe- oder Verdrehrichtung beabstandet zueinander angeordneten Magnetfeldsensoren (30) versehen ist.

8. Messsystem nach Anspruch 7, bei dem zwischen den Magnetfeldsensoren (30) ein Abstand von etwa einem Vielfachen eines Viertels der Periodenlänge vorgesehen ist.
